(19) Europäisches Patentamt
European Patent Office
Office européen des brevets

(11) Veröffentlichungsnummer : **0 045 402**
**B1**

(12) **EUROPÄISCHE PATENTSCHRIFT**

(45) Veröffentlichungstag der Patentschrift : **26.09.84**

(51) Int. Cl.³ : **C 09 B 44/10**

(21) Anmeldenummer : **81105444.4**

(22) Anmeldetag : **13.07.81**

# (54) Verfahren zur Quaternierung von 1,3,4-Thiadiazol-Azofarbstoffen.

(30) Priorität : **25.07.80 DE 3028168**

(43) Veröffentlichungstag der Anmeldung : **10.02.82 Patentblatt 82/06**

(45) Bekanntmachung des Hinweises auf die Patenterteilung : **26.09.84 Patentblatt 84/39**

(84) Benannte Vertragsstaaten : **CH DE FR GB IT LI**

(56) Entgegenhaltungen :
**FR-A- 2 423 515**
**FR-A- 2 436 162**
**GB-A- 1 545 496**
**Die Akte enthält technische Angaben, die nach dem Eingang der Anmeldung eingereicht wurden und die nicht in dieser Patentschrift enthalten sind.**

(73) Patentinhaber : **BAYER AG**
**Konzernverwaltung RP Patentabteilung**
**D-5090 Leverkusen 1 Bayerwerk (DE)**

(72) Erfinder : **Fürstenwerth, Hauke, Dr.**
**Morgengraben 3**
**D-5000 Koeln 80 (DE)**

**EP 0 045 402 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die vorliegende Erfindung betrifft ein Verfahren zur Herstellung von 1,3,4-Thiadiazoliumfarbstoffen der allgemeinen Formel

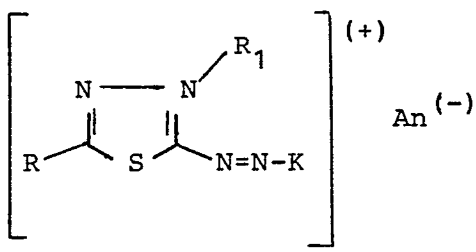 (I)

worin

R Wasserstoff ; Alkyl ; Aryl ; Alkyl- oder Arylmercapto : Alkyl- oder Arylsulfonyl ; Alkoxy oder Aroxy ; Amino, das durch Alkyl, Alkenyl oder Aralkyl mono- oder disubstituiert oder durch Aryl, Acyl, Cycloalkyl, Amino, (Di)Alkylamino, Aralkylamino, Arylamino oder einen heterocyclischen Rest monosubstituiert sein kann, oder einen heterocyclischen Rest,

K den Rest einer Kupplungskomponente,

$R_1$ $C_1$-$C_4$-Alkyl und

$An^{(-)}$ ein Anion bedeuten,

durch Quaternierung von 1,3,4-Thiadiazolazofarbstoffen der Formel

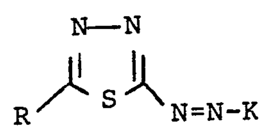 (II)

mit Quaternierungsmitteln der Formel

$$Y—SO_3—R_1 \quad (III)$$

worin

Y für Aryl oder $OR_1$ steht,

in Gegenwart einer zur Säurebindung befähigten Verbindung in wäßrigem Medium.

Die Reaktionstemperatur liegt z. B. bei 10-70 °C, vorzugsweise bei 20-50 °C. Das Quaternierungsmittel wird vorzugsweise in einer Gesamtmenge von nicht mehr als 5 Mol, insbesondere 1,5 bis 5 Mol, pro Mol Azofarbstoff einer wäßrigen Dispersion des Farbstoffs zugesetzt, wobei der pH-Wert des Gemisches durch Zugabe eines Säureakzeptors bei pH 2-8, bevorzugt 3-7, gehalten wird.

Wenn das Anion von dem bei der Quaternierung entstehenden Anion der Formel

$$Y—SO_3^{(-)}$$

verschieden sein soll, so wird es durch ein in der Farbstoffchemie übliches Anion nach bekannten Verfahren ersetzt.

Die vorstehend genannten Alkyl-, Aryl-, Cycloalkyl- und heterocyclischen Substituenten können ihrerseits durch nichtionogene Reste oder die Carboxylgruppe substituiert sein.

Nichtionogene Substituenten im Sinne der vorliegenden Erfindung sind die in der Farbstoffchemie üblichen nicht dissoziierenden Substituenten, wie z. B. Cyan, Hydroxy, Halogen, wie Fluor, Chlor oder Brom, Nitro, Alkyl, Mono- und Dialkylamino, Phenyl, Alkoxy, Acyloxy, Alkoxycarbonyl, Alkoxycarbonyloxy und Alkyl für cyclische Reste.

Vorzugsweise wird unter Alkyl ein Rest mit 1-4 C-Atomen, unter Alkenyl ein Rest mit 2-4 C-Atomen, unter Aryl Phenyl, unter Aralkyl Benzyl oder Phenylethyl, unter Cycloalkyl Cyclopentyl oder Cyclohexyl, unter Acyl $C_1$-$C_3$-Alkylcarbonyl, Benzoyl, $C_1$-$C_4$-Alkoxycarbonyl, Mono- und Di-$C_1$-$C_4$-alkylaminocarbonyl, Benzylaminocarbonyl, $C_1$-$C_4$-Alkylsulfonyl, Phenylsulfonyl oder Di-$C_1$-$C_4$-alkylaminosulfonyl verstanden.

Geeignete heterocyclische Reste am Stickstoff von R sind z. B. der 2-Thienyl-, 2-Furyl- und 2-Tetrahydrofurylrest.

Geeignete heterocyclische Reste R sind z. B. der Pyrrolidin-, Piperidin-, Morpholin- oder Piperazin-Rest.

Beispiele für die Kupplungskomponente K sind solche der Benzol-, Naphthalin-, Indol-, Pyrazol- oder

der aliphatischen Reihe mit einer kupplungsfähigen Methylengruppe. Als Kupplungskomponenten der Benzolreihe sind auch annellierte Benzolderivate zu verstehen, z. B. Reste der Dihydroindol-, Tetrahydrochinolin-, Carbazol-, Hexahydro-carbazol- und Julolidinreihe.

Das Verfahren eignet sich besonders gut zur Herstellung von Farbstoffen der Formel

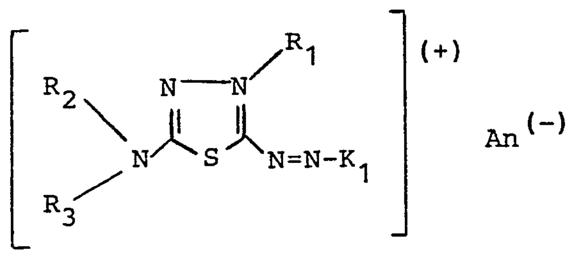 (IV)

worin

$R_2$ Wasserstoff, einen gegebenenfalls durch Hydroxy, Halogen, Cyan, $C_1$-$C_4$-Alkoxy, Carboxyl, Aminocarbonyl oder $C_1$-$C_4$-Alkoxycarbonyl substituierten $C_1$-$C_8$-Alkylrest, einen $C_2$-$C_4$-Alkenylrest, einen gegebenenfalls durch $C_1$-$C_4$-Alkyl substituierten Cyclohexylrest, einen gegebenenfalls durch Halogen, $C_1$-$C_4$-Alkyl oder $C_1$-$C_4$-Alkoxy substituierten Phenyl-, Benzyl- oder Phenylethylrest, einen $C_1$-$C_4$-Alkyloxycarbonyl-, mono- oder Di-$C_1$-$C_4$-alkylaminocarbonyl-, Aminocarbonyl-, Mono- oder Di-$C_1$-$C_4$-alkylaminosulfonyl-, 2-Thienyl-, 2-Furyl-, 2-Tetrahydrofuryl-, Amino-, $C_1$-$C_4$-Alkylamino-, Di-($C_1$-$C_4$-alkyl)-amino-, einen gegebenenfalls durch $C_1$-$C_4$-Alkyl oder $C_1$-$C_4$-Alkoxy substituierten Phenylamino- oder Benzylamino-Rest,

$R_3$ einen gegebenenfalls durch Hydroxy, Halogen, Cyan, $C_1$-$C_4$-Alkoxy, Carboxyl, Aminocarbonyl oder $C_1$-$C_4$-Alkoxycarbonyl substituierten $C_1$-$C_8$-Alkylrest, einen $C_2$-$C_4$-Alkenylrest oder einen gegebenenfalls durch Halogen, $C_1$-$C_4$-Alkyl oder $C_1$-$C_4$-Alkoxy substituierten Phenyl-, Benzyl- oder Phenylethylrest,

$K_1$ eine Kupplungskomponente der Formel

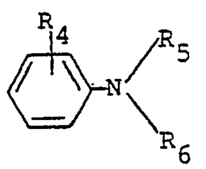 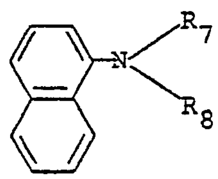 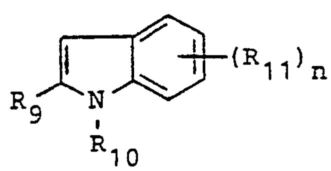 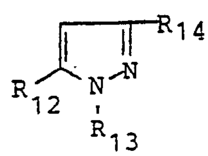

$R_4$ Wasserstoff, einen gegebenenfalls durch Halogen substituierten $C_1$-$C_4$-Alkylrest, einen $C_1$-$C_4$-Alkoxyrest, Halogen oder Cyan,

$R_5$ und $R_7$ Wasserstoff, einen gegebenenfalls durch Hydroxy, Halogen, Cyan, $C_1$-$C_4$-Alkoxy, Carbonyl, Aminocarbonyl oder $C_1$-$C_4$-Alkoxycarbonyl substituierten $C_1$-$C_8$-Alkylrest oder einen gegebenenfalls durch Halogen, $C_1$-$C_4$-Alkyl oder $C_1$-$C_4$-Alkoxy substituierten Benzyl- oder Phenylethylrest,

$R_6$ und $R_8$ einen gegebenenfalls durch Hydroxy, Halogen, Cyan, $C_1$-$C_4$-Alkoxy, Carboxyl, Aminocarbonyl oder $C_1$-$C_4$-Alkoxycarbonyl substituierten $C_1$-$C_8$-Alkylrest, einen gegebenenfalls durch Halogen, $C_1$-$C_4$-Alkyl oder $C_1$-$C_4$-Alkoxy substituierten Phenyl-, Benzyl- oder Phenylethylrest,

$R_9$ einen gegebenenfalls durch Hydroxy, Halogen, Cyan, $C_1$-$C_4$-Alkoxy, Carboxyl, Aminocarbonyl oder $C_1$-$C_4$-Alkoxycarbonyl substituierten $C_1$-$C_8$-Alkylrest oder einen gegebenenfalls durch Halogen, $C_1$-$C_4$-Alkyl oder $C_1$-$C_4$-Alkoxy substituierten Phenylrest,

$R_{10}$ Wasserstoff, einen gegebenenfalls durch Hydroxy, Halogen, Cyan, $C_1$-$C_4$-Alkoxy, Carboxyl, Aminocarbonyl oder $C_1$-$C_4$-Alkoxycarbonyl substituierten $C_1$-$C_8$-Alkylrest oder einen gegebenenfalls durch Halogen, $C_1$-$C_4$-Alkyl oder $C_1$-$C_4$-Alkoxy substituierten Benzyl- oder Phenylethylrest,

$R_{11}$ Wasserstoff, einen gegebenenfalls durch Hydroxy, Halogen, Cyan, $C_1$-$C_4$-Alkoxy, Carboxyl, Aminocarbonyl oder $C_1$-$C_4$-Alkoxycarbonyl substituierten $C_1$-$C_8$-Alkylrest, Cyan, Halogen oder Nitro,

$R_{12}$ Amino oder Hydroxy,

$R_{13}$ Wasserstoff, $C_1$-$C_4$-Alkyl, einen gegebenenfalls durch Halogen, $C_1$-$C_4$-Alkyl, $C_1$-$C_4$-Alkoxy oder Nitro substituierten Phenyl- oder Benzylrest und

$R_{14}$ Wasserstoff, Methyl, Halogen, Cyan, Methoxy- oder Ethoxycarbonyl bedeuten,

worin $R_2$ mit $R_3$, $R_5$ mit $R_6$ und $R_7$ mit $R_8$ zu einem gegebenenfalls durch $C_1$-$C_4$-Alkyl substituierten Pyrrolidin-, Piperidin-, Morpholin- oder Piperazin-Ring verbunden sein können, und

worin $R_5$ und/oder $R_6$ mit der o-Stellung des Benzolringes verbunden sein können und dann gemeinsam mit dem Benzolring und dem Stickstoffatom einen gegebenenfalls durch $C_1$-$C_4$-Alkyl substituierten Dihydroindol-, Tetrahydrochinolin-, Tetrahydrochinoxalin- oder Tetrahydro-1,4-benzoxazinring bilden können und

n 1, 2 oder 3 bedeuten, und

$An^{(-)}$ und $R_1$ die vorstehend genannte Bedeutung haben.

Die erfindungsgemäß verwendeten säurebindenden Verbindungen sind z. B. Alkali- oder Erdalkalimetalloxide, -carbonate, -bicarbonate, -acetate oder basische Zinkverbindungen. Im besonderen können Natriumhydroxid, Natriumcarbonat, Natriumhydrogencarbonat, Magnesiumoxid, Magnesiumcarbonat, Zinkoxid, Zinkcarbonat, Zinkhydroxid oder Gemische derselben verwendet werden.

Geeignete Quaternierungsmittel (III) sind z. B. Dimethyl-, Diethyl- oder Dipropylsulfat, sowie Benzolsulfonsäuremethylester und p-Toluolsulfonsäuremethylester.

Die Aufrechterhaltung des pH-Wertes des Reaktionsgemisches während der Quaternierung zwischen 2 und 8, bevorzugt 3-7 hat den Vorteil, daß mit einem relativ kleinen Überschuß an Quaternierungsmittel eine vollständige Umsetzung erreicht wird. So genügen in der Regel ca. 2,5 Mol Alkylsulfat pro Mol eingesetztem Thiadiazolazofarbstoff. Man beginnt das erfindungsgemäße Verfahren vorteilhaft bei einem pH-Wert von etwa 5-8, insbesondere 6-7, und hält diesen während der Quaternierung zwischen 2 und 8, insbesondere 3-7. Nach dem Ende der Reaktion kann dann ein pH-Wert von unter 2, z. B. von 0,5-1, eingestellt werden.

Für die technische Herstellung der kationischen Thiadiazolfarbstoffe ist es zwingend erforderlich, daß nach beendeter Alkylierung überschüssiges Alkylierungsmittel im Reaktionsgemisch vollständig zerstört wird. Dieses geschieht durch Erhitzen des sauren Reaktionsgemisches auf 60-80 °C, bis alle Reste von nicht umgesetztem Alkylierungsmittel hydrolysiert sind. Die Zerstörung des Alkylierungsmittels geschieht vorteilhaft bei einem pH-Wert von unterhalb 2.

Nach vollzogener Quaternierung mit anschließender Hydrolyse des überschüssigen Alkylierungsmittels liegen die kationischen 1,3,4-Thiadiazolfarbstoffe in Form von wäßrigen Lösungen vor, die als solche zum Färben eingesetzt werden können, oder aus denen heraus die Farbstoffe nach üblichen Verfahren isoliert werden können. Der Isolierung kann eine Klärfiltration vorgeschaltet werden. Die Farbstoffe lassen sich z. B. als Halogenide, Tetrafluoroborate, Benzolsulfonate, Toluolsulfonate oder Tetrachlorozinkate isolieren. Sollen die Farbstoffe als Benzol- oder Toluolsulfonate isoliert werden, so ist die Verwendung der entsprechenden Alkylester als Alkylierungsmittel zweckmäßig. Die Isolierung als Zinkdoppelsalz ist besonders geeignet. Bei der Herstellung dieser Salze ist die Verwendung von basischen Zinksalzen als Säureakzeptor vorteilhaft.

Die erfindungsgemäß hergestellten Farbstoffe sind beispielsweise aus der canadischen Patentschrift 556 218, der französischen Patentschrift 1 199 411 und der deutschen Offenlegungsschrift 2 811 258 bekannt.

Die Herstellung erfolgte bisher durch Quaternierung von 1,3,4-Thiadiazolazofarbstoffen in einem indifferenten organischen Lösungsmittel. Die Verwendung von organischen Lösungsmitteln bei der technischen Durchführung dieses Herstellungsverfahrens ist mit Nachteilen verbunden. Sie erfordert einen hohen apparativen und sicherheitstechnischen Aufwand. Weiterhin ist es aus ökologischen und wirtschaftlichen Gründen zwingend erforderlich, in einem nachgeschalteten Verfahren das organische Lösungsmittel wiederzugewinnen.

Einzelheiten sind den nachfolgenden Beispielen zu entnehmen, die zur Erläuterung des erfindungsgemäßen Verfahrens dienen. Die Teile sind Gewichtsteile, die Prozentangaben entsprechen Gewichtsprozenten.

## Beispiel 1

82,6 g (0,3 Mol) der Azoverbindung der Formel

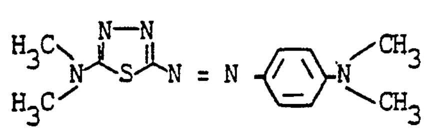

werden in 200 ml Wasser suspendiert. Unter Kühlung werden bei 40 °C 87 ml (0,9 Mol) Dimethylsulfat innerhalb von 15 Minuten zugetropft. Man rührt bei 40 °C-45 °C nach und tropft im Verlauf von ca. 2 Stunden 70 ml einer 40 % Natronlauge so zu, daß der pH-Wert des Gemisches stets bei 4 gehalten wird. Sobald dünnschichtchromatographisch kein neutraler Azofarbstoff mehr nachzuweisen ist, wird das Gemisch 2 Stunden auf 70 °C erwärmt. Hierbei fällt der pH-Wert der Lösung auf 0,8-1,5 ab. Man kühlt die Lösung auf ca. 30 °C ab und salzt den quaternierten Azofarbstoff durch Zugabe von 20 g Zinkchlorid und 30 g Natriumchlorid aus. Er wird abgesaugt und bei 80 °C im Vakuum getrocknet. Es werden 130 g des Farbstoffes der Formel

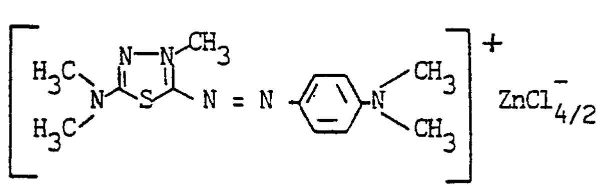

erhalten. Er färbt Polyacrylnitrilfasern in blauen Tönen mit sehr guten Echtheiten.

Beispiel 2

82,6 g (0,3 Mol) des 1. Farbstoffes des Beispiels 1 werden in 250 ml Wasser verrührt und mit 3 g Magnesiumoxid versetzt. Bei 40 °C werden unter Kühlung 87 ml (0,9 Mol) Dimethylsulfat innerhalb von 10 Minuten zugetropft. Man rührt bei 40 °C-45 °C nach. Sobald die Umsetzung beendet ist, wird die Reaktionslösung 2 Stunden auf 70 °C erwärmt und der Farbstoff wie in Beispiel 1 isoliert. Man erhält 129 g Farbstoff mit identischen Eigenschaften zu dem in Beispiel 1 erhaltenen Produkt.

Beispiel 3

99,6 g (0,3 Mol) des Azofarbstoffes der Formel

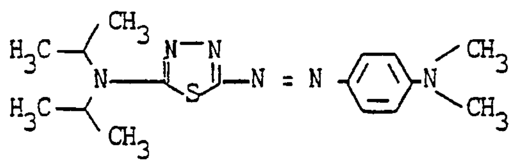

werden in 250 ml Wasser unter Zusatz von 12,2 g Zinkoxyd suspendiert. Bei 40 °C werden 70 ml (0,74 Mol) Dimethylsulfat innerhalb von 15 Minuten zugegeben. Man rührt 2 Stunden bei 40 °C und 2 Stunden bei 70 °C nach. Anschließend werden 2 g Aktivkohle eingerührt, die Farbstofflösung abgesaugt und der quaternierte Farbstoff durch Zugabe von 80 g Natriumchlorid ausgesalzen. Nach Absaugen und Trocknen erhält man 131 g Farbstoff der Formel

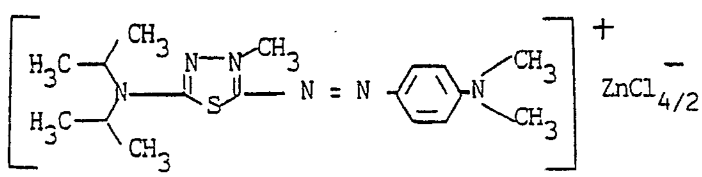

Der Farbstoff färbt Polyacrylnitril in blauen Tönen mit hervorragenden Echtheiten.

Beispiel 4

252 g (0,7 Mol) des Azofarbstoffes der Formel

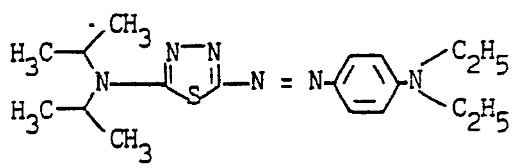

werden in 900 ml $H_2O$ suspendiert, mit 28,5 g Zinkoxid versetzt und bei 40 °C werden unter Kühlung 170 ml (1,8 Mol) Dimethylsulfat zugegeben. Man rührt 3 Stunden bei 40 °C und 2 Stunden bei 70 °C nach. Danach wird die Farbstofflösung mit 100 g Natriumchlorid versetzt. Nach Isolieren und Trocknen erhält man 330 g des Farbstoffes der Formel

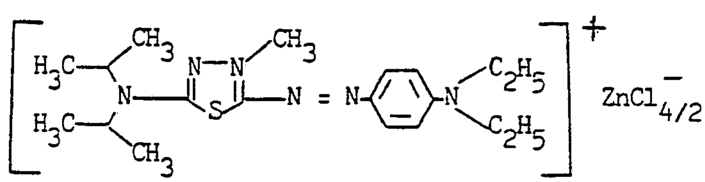

Er färbt Polyacrylnitril in blauen Tönen mit ausgezeichneten Echtheiten.

Beispiel 5

174 g (0,63 Mol) der Azoverbindung des Beispiels 1 werden in 300 ml Wasser suspendiert. Bei 65 °C werden unter Kühlung 160 ml (1,2 Mol) Benzolsulfonsäuremethylester innerhalb von 30 Minuten zugetropft. Man rührt bei 60 °C 3 Stunden nach und hält hierbei den pH-Wert des Gemisches durch Zutropfen von Natronlauge auf pH 4. Sobald die Umsetzung vollständig ist, wird die Farbstofflösung 2 Stunden bei 85 °C nachgerührt. Danach wird die Lösung auf 10 °C abgekühlt und der ausgefallene Farbstoff isoliert. Nach dem Trocknen erhält man 305 g des Farbstoffes der Formel

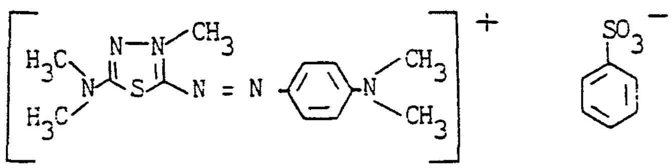

Er färbt Polyacrylnitril in blauen Farbtönen mit sehr guten Echtheiten.

## Beispiel 6

66,2 g (0,2 Mol) der Azoverbindung der Formel

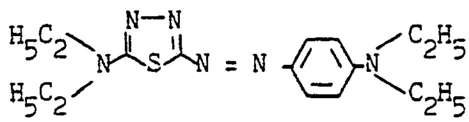

werden in 100 ml Wasser supendiert. Nach Zugabe von 1,5 g Magnesiumoxid werden bei 50 °C 54 ml (0,4 Mol) Benzolsulfonsäuremethylester zugetropft. Man rührt 2 Stunden bei 50 °C und 2 Stunden bei 85 °C nach. Sodann wird die Farbstofflösung auf 20 °C abgekühlt und der quaternierte Azofarbstoff durch Zugabe von 15 g Kochsalz und 0,22 Mol Tetrafluorborsäurelösung ausgefällt. Nach dem Isolieren und Trocknen erhält man 61 g des Farbstoffes der Formel

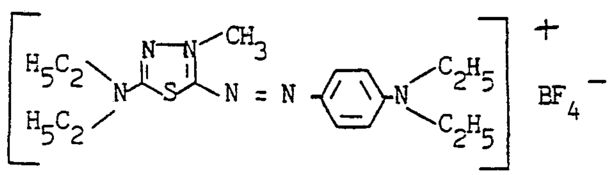

Er färbt Polyacrylnitril in blauen Tönen mit sehr guten coloristischen Eigenschaften.

## Beispiel 7

166 g (0,5 Mol) Azofarbstoff des Beispiels 3 werden in 370 ml Wasser suspendiert. Nach Zusatz von 13 g MgO werden bei 40 °C unter Kühlung 120 ml (1,25 Mol) Dimethylsulfat zugetropft. Man rührt 3 Stunden bei 40 °C und 2 Stunden bei 70 °C nach. Danach werden 60 g Kochsalz eingerührt und auf 20 °C abgekühlt. Nach Isolieren und Trocknen erhält man 185 g des Farbstoffes

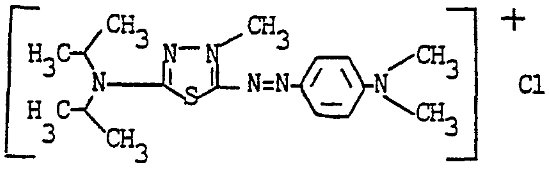

Er färbt Polyacrylnitril in blauen Tönen mit ausgezeichneten Echtheiten.

Verfährt man in analoger Weise nach einem der obigen Beispiele 1 bis 7, setzt jedoch anstelle der dort angegebenen Ausgangsazofarbstoffe die äquivalenten Mengen einer der in der nachstehenden Tabellen-Beispielen angegebenen Ausgangsazofarbstoffe ein und methyliert sie in der angegebenen Weise, so erhält man die entsprechenden quaternierten 1.3.4-Thiadiazoliumazofarbstoffe. Sie färben Polyacrylnitril ebenfalls mit ausgezeichneten Echtheiten in den in der Tabelle angegebenen Farbtönen.

Tabelle

| Bsp. | Ausgangsazofarbstoff | Farbton |
|---|---|---|
| 8 | 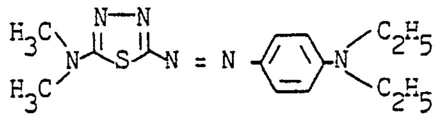 | blau |
| 9 | 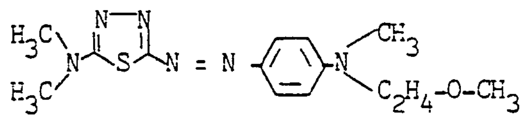 | blau |
| 10 | 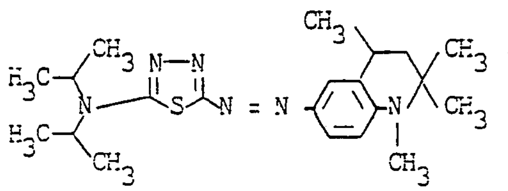 | blau |
| 11 | 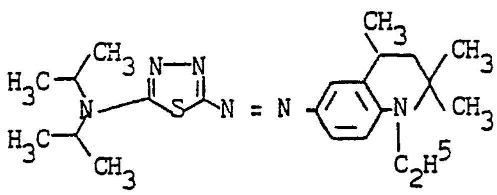 | blau |
| 12 | 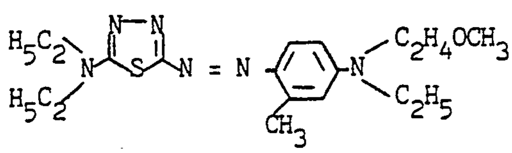 | |
| 13 | 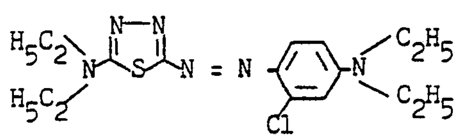 | blau |
| 14 | 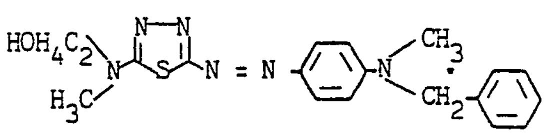 | blau |
| 15 | 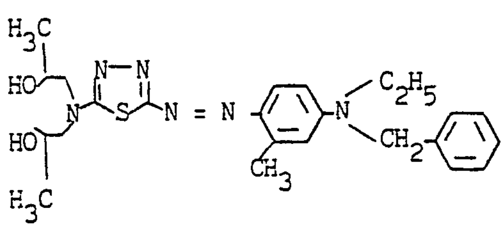 | blau |
| 16 | 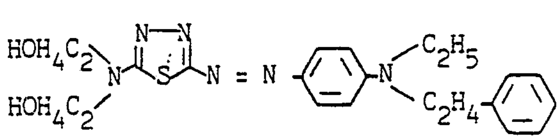 | blau |

Tabelle (Fortsetzung)

| Esp. | Ausgangsazofarbstoff | Farbton |
|---|---|---|
| 17 | 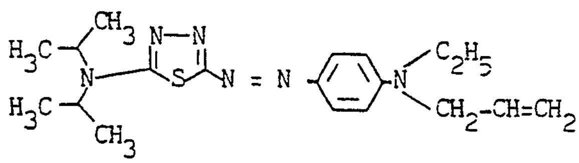 | blau |
| 18 | 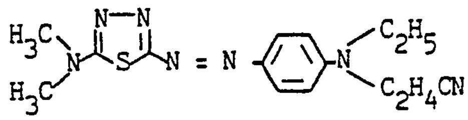 | blau |
| 19 | 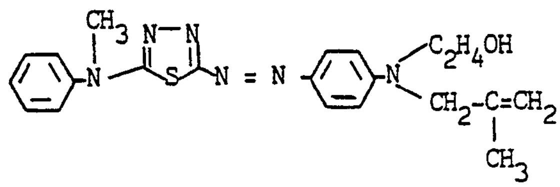 | blau |
| 20 | 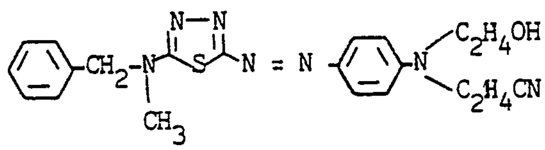 | blau |
| 21 | 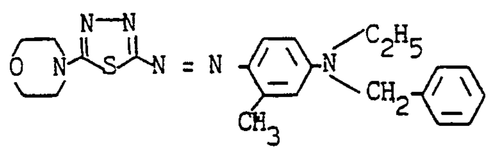 | blau |
| 22 | 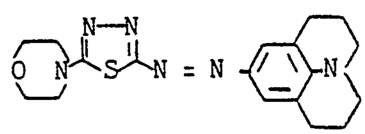 | blau |
| 23 | 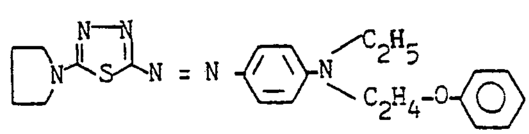 | blau |
| 24 | 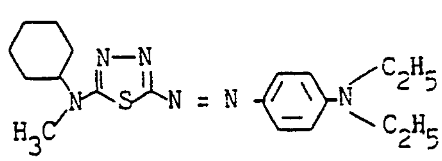 | blau |
| 25 | 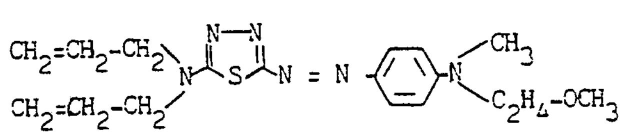 | blau |

Tabelle (Fortsetzung)

| Esp. | Ausgangsazofarbstoff | Farbton |
|---|---|---|
| 26 | 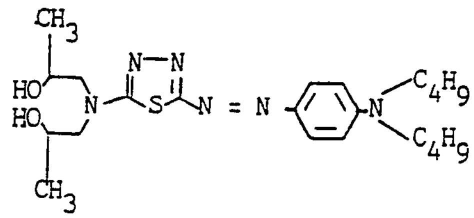 | blau |
| 27 | 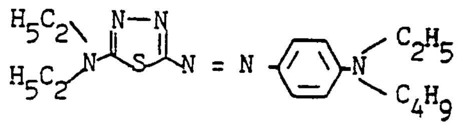 | blau |
| 28 | 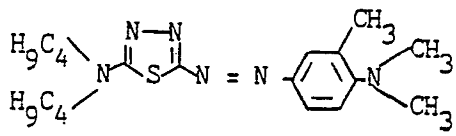 | blau |

**Ansprüche**

1. Verfahren zur Herstellung von 1,3,4-Thiadiazolium-farbstoffen der allgemeinen Formel

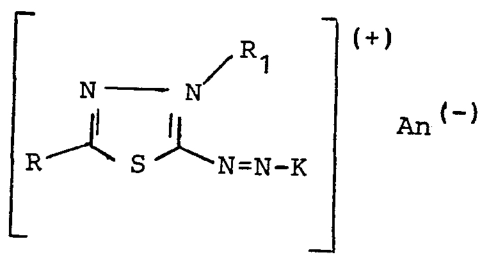

worin

R Wasserstoff ; Alkyl ; Aryl ; Alkyl- oder Arylmercapto ; Alkyl- oder Arylsulfonyl ; Alkoxy oder Aroxy ; Amino, das durch Alkyl, Alkenyl oder Aralkyl mono- oder disubstituiert oder durch Aryl, Acyl, Cycloalkyl, Amino, (Di)Alkylamino, Aralkylamino, Arylamino oder einen heterocyclischen Rest monosubstituiert sein kann ; oder einen heterocyclischen Rest,

K den Rest einer Kupplungskomponente,

$R_1$ $C_1$-$C_4$-Alkyl und

$An^{(-)}$ ein Anion bedeuten,

durch Quaternierung von 1,3,4-Thiadiazol-azofarbstoffen der Formel

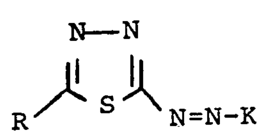

(II)

mit Quaternierungsmitteln der Formel

$$Y—SO_3—R_1 \quad (III)$$

worin

Y für Aryl oder $OR_1$ steht,

in Gegenwart einer zur Säurebindung befähigten Verbindung, dadurch gekennzeichnet, daß man die Quaternierung in wäßrigem Medium durchführt.

2. Verfahren nach Anspruch 1, dadurch gekennzeichnet, daß man die Quaternierung mit 1,5 bis 5 Mol des Quaternierungsmittels, bezogen auf den 1,3,4-Thiadiazolazofarbstoff durchführt.

3. Verfahren nach Anspruch 1, dadurch gekennzeichnet, daß man die Quaternierung bei 10-70 °C durchführt.

4. Verfahren nach Anspruch 1, dadurch gekennzeichnet, daß man als zur Säurebindung befähigte Verbindung Natriumhydroxid, Natriumcarbonat, Natriumhydrogencarbonat oder Natriumacetat verwendet.

5. Verfahren nach Anspruch 1, dadurch gekennzeichnet, daß man als zur Säurebindung befähigte Verbindung Magnesiumoxid oder Magnesiumcarbonat verwendet.

6. Verfahren nach Anspruch 1, dadurch gekennzeichnet, daß man als zur Säurebindung befähigte Verbindung Zinkoxid, Zinkcarbonat, Zinkhydroxid oder Zinkacetat verwendet.

7. Verfahren nach Anspruch 1, dadurch gekennzeichnet, daß man die Quaternierung bei einem pH-Wert von 2-8 durchführt.

8. Verfahren nach Anspruch 1, dadurch gekennzeichnet, daß man das Reaktionsgemisch nach der Quaternierung bei einem pH-Wert unterhalb von 2 bis etwa 60-80 °C erhitzt.

9. Verfahren nach Anspruch 1, dadurch gekennzeichnet, daß man den Thiadiazoliumfarbstoff aus der Reaktionslösung als Chlorid, Bromid, Tetrafluoroborat, Benzolsulfonat oder Tetrachlorzinkat abscheidet.

## Claims

1. Process for the preparation of 1,3,4-thiadiazolium dyestuffs of the general formula

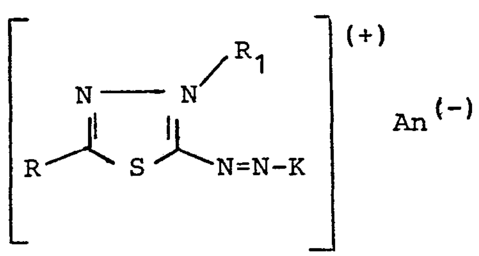

wherein

R denotes hydrogen ; alkyl ; aryl ; alkyl- or arylmercapto ; alkyl- or arylsulphonyl ; alkoxy or aryloxy ; amino which can be monosubstituted or disubstituted by alkyl, alkenyl or aralkyl or monosubstituted by aryl, acyl, cycloalkyl, amino, (di)alkylamino, aralkylamino, arylamino or a heterocyclic radical ; or a heterocyclic radical,

K denotes $C_1$-$C_4$-alkyl and

$An^{(-)}$ denotes an anion,

by quaternisation of 1,3,4-thiadiazole-azo dyestuffs of the formula

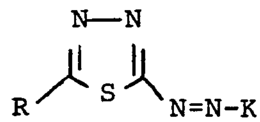

(II)

with quaternising agents of the formula

$$Y{-}SO_3{-}R_1 \quad \text{(III)}$$

wherein

Y represents aryl or $OR_1$,

in the presence of a compound which is capable of binding acids, characterised in that the quaternisation is carried out in an aqueous medium.

2. Process according to Claim 1, characterised in that the quaternisation is carried out with 1.5 to 5 mol of the quaternising agent, relative to the 1,3,4-thiadiazole-azo dyestuff.

3. Process according to Claim 1, characterised in that the quaternisation is carried out at 10-70 °C.

4. Process according to Claim 1, characterised in that sodium hydroxide, sodium carbonate, sodium bicarbonate or sodium acetate is used as the compound which is capable of binding acids.

5. Process according to Claim 1, characterised in that magnesium oxide or magnesium carbonate is used as the compound which is capable of binding acids.

6. Process according to Claim 1, characterised in that zinc oxide, zinc carbonate, zinc hydroxide or zinc acetate is used as the compound which is capable of binding acids.

7. Process according to Claim 1, characterised in that the quaternisation is carried out at a pH value of 2-8.

8. Process according to Claim 1, characterised in that, after the quaternisation, the reaction mixture is heated to about 60-80 °C at a pH value below 2.

9. Process according to Claim 1, characterised in that the thiadiazolium dyestuff is separated out of the reaction solution as the chloride, bromide, tetrafluoborate, benzenesulphonate or tetrachlorozincate.

**Revendications**

1. Procédé de production de colorants de 1,3,4-thiadiazolium de formule générale

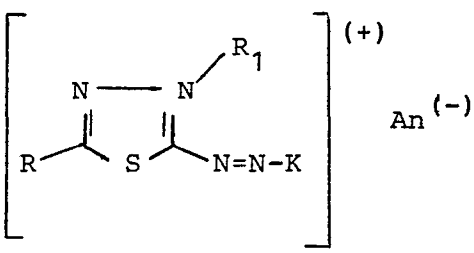

dans laquelle

R désigne l'hydrogène ; un groupe alkyle ; aryle ; alkyl- ou arylmercapto ; alkyl- ou arylsulfonyle ; alkoxy ou aroxy ; amino, qui peut être monosubstitué ou disubstitué par un reste alkyle, alcényle ou aralkyle ou monosubstitué par un reste aryle, acyle, cycloalkyle, amino, (di)alkylamino, aralkylamino, arylamino ou un reste hétérocyclique ; ou bien un reste hétérocyclique,

K est le reste d'un copulant

$R_1$ est un groupe alkyle en $C_1$ à $C_4$ et

$An^{(-)}$ désigne un anion,

par quaternisation de colorants 1,3,4-thiadiazole-azoïques de formule

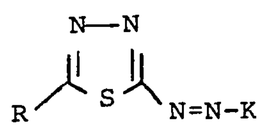

(II)

avec des agents de quaternisation de formule

$$Y—SO_3—R_1 \quad (III)$$

dans laquelle

Y est un groupe aryle ou $OR_1$,

en présence d'un accepteur d'acide, caractérisé en ce qu'on conduit la quaternisation en milieu aqueux.

2. Procédé suivant la revendication 1, caractérisé en ce qu'on conduit la quaternisation avec 1,5 à 5 moles de l'agent de quaternisation par rapport au colorant 1,3,4-thiadiazole-azoïque.

3. Procédé suivant la revendication 1, caractérisé en ce qu'on conduit la quaternisation à 10-70 °C.

4. Procédé suivant la revendication 1, caractérisé en ce qu'on utilise comme composé accèpteur d'acide l'hydroxyde de sodium, le carbonate de sodium, le bicarbonate de sodium ou l'acétate de sodium.

5. Procédé suivant la revendication 1, caractérisé en ce qu'on utilise comme accepteur d'acide l'oxyde de magnésium ou le carbonate de magnésium.

6. Procédé suivant la revendication 1, caractérisé en ce qu'on utilise comme composé accepteur d'acide l'oxyde de zinc, le carbonate de zinc, l'hydroxyde de zinc ou l'acétate de zinc.

7. Procédé suivant la revendication 1, caractérisé en ce qu'on conduit la quaternisation à une valeur de pH de 2 à 8.

8. Procédé suivant la revendication 1, caractérisé en ce qu'on chauffe le mélange réactionnel jusqu'à environ 60-80 °C après la quaternisation, à une valeur de pH inférieure à 2.

9. Procédé suivant la revendication 1, caractérisé en ce qu'on sépare le colorant de thiadiazolium de la solution réactionnelle sous la forme du chlorure, bromure, tétrafluoroborate, benzènesulfonate ou tétrachlorozincate.